# EUROPEAN PATENT SPECIFICATION

(11) **EP 0 861 721 B1**
(45) Date of publication and mention of the grant of the patent: **24.08.2005**
(21) Application number: 98103220.4
(22) Date of filing: 24.02.1998
(51) Int. Cl.: B65H 35/00, B32B 17/10

(54) **a method and unit for positioning a layer of material onto a sheet to be covered, preferably a sheet of glass**
Verfahren und Vorrichtung zum Anbringen einer Materialschicht auf eine zu beschichtende Platte, vorzugsweise auf eine Glasscheibe
Procédé et dispositif pour positionner un film sur une plaque à revêtir, de préférence une plaque de verre

(30) Priority: 28.02.1997 IT TO970172
(43) Date of publication of application: 02.09.1998
(73) Proprietor: BOTTERO S.p.A., 12010 Cuneo (IT)
(72) Inventor: Bergia, Alessandro, 12023 Caraglio (IT); Quaglia, Teresio, 12100 Cuneo (IT)
(74) Representative: Cerbaro, Elena

(56) References cited:
- DE-U- 29 503 778
- DE-U- 29 709 661
- US-A- 3 260 143
- US-A- 3 831 472
- US-A- 4 079 645
- US-A- 5 445 053

## Description

The present invention relates to a unit for positioning a layer of material onto a sheet, preferably a sheet of glass.

In particular, the present invention is advantageously, but not exclusively, applicable to the continuous production of laminated (multilayer) sheets, to which the following specification will make explicit reference without loss of generality thereby.

US 3260143 shows an apparatus for storing bolts of cloths, which are spread horizontaly and lied one onto the other.

For the production of sheets of laminated glass and, in particular, sheets having sheets of glass intercalated with one or more layers of thermoplastic material it is known to hold the glass sheet to be covered in a fixed position at a forming station, to grip one edge of the covering material normally wound on a coil, and to unwind it by progressively drawing it over the sheet thereby making it slide on the sheet itself.

This mode of operation, although used, does not allow the production of products all having a high and constant quality and reliability.

What is explained above essentially derives from the fact that during the sliding of the layer of material over the sheet, notwithstanding that positioning takes place in a controlled environment, the sheet material itself adheres locally to the glass sheet so that, inevitably, during advance along the sheet, waves, curls or wrinkles and/or pockets are created in some zones and consequent positioning in others. These wrinkles and stretches are difficult to eliminate, especially in an automatic continuous forming process, and translates ultimately into a loss of homogeneity in the deposited layer.

The presence of trapped air bubbles, on the other hand, compromises both the reliability of the laminated sheet, in that the air bubbles generate localised delaminations of the layer of material from the sheet, and render the laminated sheet itself unacceptable and with a variable light permeability from region to region.

The adherence of the layer material to the sheet, is moreover even more accentuated in the presence of electrostatic charges on the layer material, thus frequently involving significant deviations or "skidding" of the layer material from the theoretical direction of advance along the sheet with the consequence that some perimatral regions of the sheet can remain uncovered, and inevitably, the laminated sheet must be rejected.
Alternatively, for positioning a layer of thermoplastics material onto sheets of glass it is known to advance both the glass sheet to be covered and the end of the layer of material which is unwound at the same velocity. Such a mode of production, although allowing the elimination of relative sliding and therefore localised adherence between the sheet and the layer of covering material is unsatisfactory in that it does not allow continuous superimposition of several layers onto the sheet.

In fact, for the deposition of a new layer of thermoplastics material the sheet covered with the first layer must be stopped again and brought back into its initial position and again repositioned thereby first of all creating a discontinuity in the cycle of production and causing relative displacements between the sheet and the first covering layer itself.

The object of the present invention is that of providing a method of positioning a layer of covering material over a sheet to be covered, which allows the above-explained problems to be solved in a simple and economic manner.

According to the present invention there is provided a method for positioning a layer of covering material onto a sheet to be covered, preferably a sheet of glass, according to claim 1.

The present invention also relates to a unit for positioning a layer of covering material over a sheet, preferably a glass sheet.

According to the present invention there is provided a unit for the positioning of a layer of covering material onto a sheet to be covered, preferably a glass sheet, according to claim 10.

The invention will now be described with reference to the attached drawings which illustrate a non-limitative embodiment thereof, in which,
Figure 1 is a side view, in section, of a preferred embodiment of the unit for positioning a layer of covering material onto a sheet, formed according to the principles of the present invention; and
Figure 2 is a drawing similar to Figure 1 and illustrates the unit of Figure 1 in a different operating condition.

In the attached figures the reference numeral 1 generally indicates a unit for positioning a layer 2 of covering material, preferably a thermoplastic material known per se, over a sheet 3 to be covered, preferably a sheet of glass.

The unit 1 comprises a support structure 4 in turn comprising a base 5 and a rigid portal frame 6 extending upwardly from the base 5.

The frame 5 supports a motorised unwinding device 7, known per se, for a strip 8 of covering material wound in a coil 9 supported in a known manner not described in detail, by its own base 10 which is only partly illustrated.

The device 7 comprises, in particular, a pair of rollers 11 and 12 rotatable about respective axes 13 parallel with one another, and of which the roller 11 is a common return roller over which the strip 8 unwound from the coil 9 passes, whilst the roller 12 is a presser roller rotatable under the thrust of an associated drive motor 14.

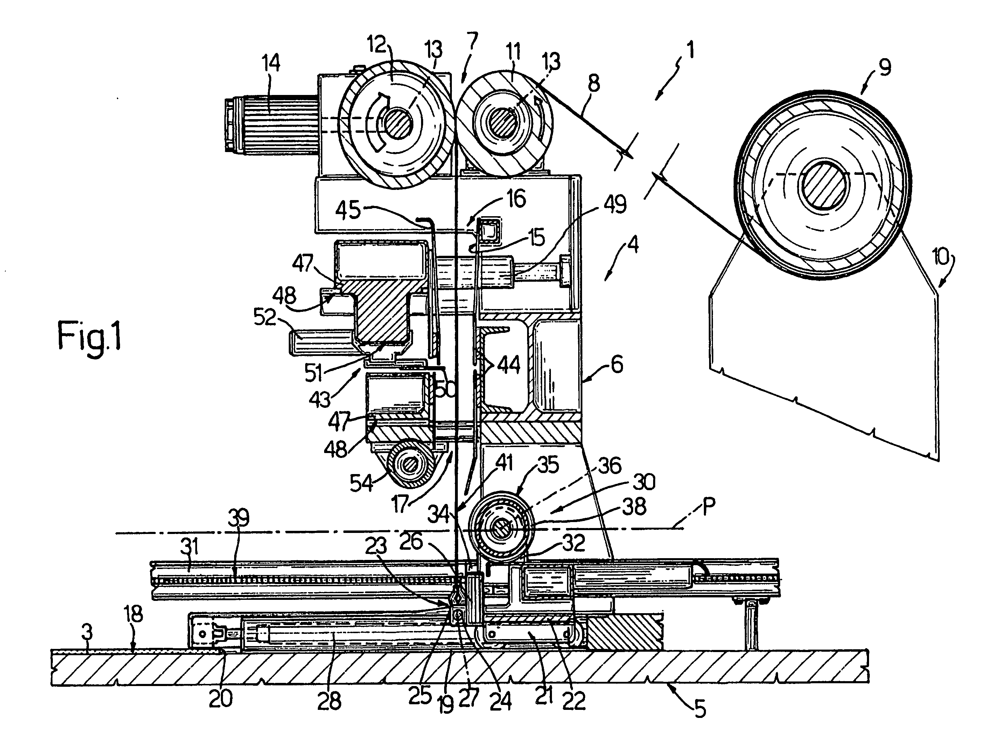

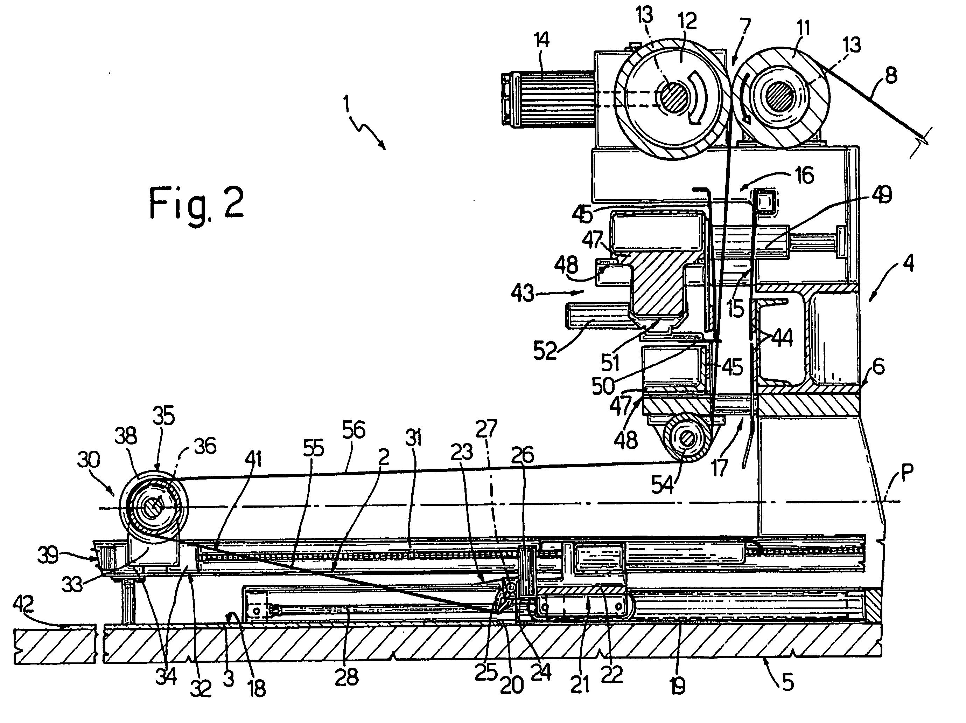

At the output from the device 7 the strip 8 passes through a channel 15 of variable width, an inlet 16 of which faces the rollers 11 and 12 and an outlet 17 of which faces the base 5. The base 5 defines a horizontal support plane 18 for the sheet 3 to be covered, disposed in a position spaced from the region where the frame 6 is connected to the base 5, and a rectilinear guide 19 which extends parallel to the plane 18 from a perimetral edge 20 of the sheet 3 towards the frame 6, and has an intermediate portion facing the outlet 17. Along the guide 19 slides a carriage 21 which has its own frame 22 and supports a gripping and retaining device 23 for a free end portion of the strip 8 projecting beyond the outlet 17. In particular the device 23 includes a crossbeam 24 connected to the frame 22 and a plurality of mechanical pincer members 25, known per se, carried by the crossbeam 24 itself. The cross beam 24 is adjustable with respect to the frame 22 in a direction orthogonal to the plane 18, preferably by means of a lead screw device 26. Each pincer member 25 is, on the other hand hinged to the cross beam 24 to rotate about an horizontal axis 27 parallel to the axis 13 and the plane 18 under the thrust of an actuator unit, known and not illustrated, preferably of the cam type, between a grip position, illustrated in Figure 1, in which the pincer member 25 is able to engage the said end of the strip 8, and a lowered retention position, illustrated in Figure 2, in which the pincer member 25 is able to retain the end of the strip 8 in a predetermined fixed position.

The carriage 21 is movable along the guide 19 under the thrust of a motion device 28, preferably of pneumatic type, between an advance position (Figure 2) in which the pincer members 25 extend close to the edge of the sheet 3 and raised with respect to the edge 20 itself, and a retracted position (Figure 1) in which the pincer members 25 extend beneath the outlet 17.

Still with reference to Figures 1 and 2, the unit 1 further includes a thrust device 30 for progressively advancing an end portion of the strip 8 retained, in use, by the pincer members 25 above the sheet 3.

The device 30 comprises a pair of C-shape rectilinear guides 31 only one of which is visible in the attached drawings, which extend parallel to the guide 19 on opposite lateral sides of the carriage 21 in a raised position with respect to the guide 19 itself and the plane 18 and a motorised slide 32. The slide 32 has its own frame 33 and a plurality of shoes 34 coupled to the guides 31 in an axially slidable manner.

The slide 32 supports a thrust drum 35 which has its axis 36 orthogonal to the guide 31 and parallel to the plane 18, and is provided with a pair of outer radial flanges 38 only one of which is visible in the attached drawings, fixedly connected to opposite ends of the drum 35 to define, in use, respective axial abutments for the strip 8. The drum 35 is coupled to the frame 33 in an angularly fixed position with respect to the guides 31 to cooperate, in use, slidingly with the strip 8. Alternatively, the drum 35 is coupled to the frame 33 in a rotatable manner about its axis 36. The slide 32 is movable along the guides 31 under the thrust of a drive device 39 known per se, preferably of the sprocket type or, alternatively, of pneumatic type, to displace the thrust drum 35 along a rectilinear path P parallel to the plane 18 and raised with respect to the plane 18 itself between two end-of-stroke positions a retracted or rest position of which is illustrated in Figure 1, and an operative advance position. When disposed in its retracted position the drum 35 lies within the frame 6 in a position underlying the roller 11 in such a way that when the carriage 21 is disposed in its retracted position and the pincer members 25 grip the end of the strip 8 the drum 35 faces and is spaced from a surface 41 of the strip 8 opposite that which, in use, will then be brought into contact with the sheet 3. When, on the other hand, it is disposed in its advanced position, the drum 35 extends close to an edge 42 of the sheet 3 opposite the edge 20.

Still with reference to the attached drawing, the unit 1 finally includes a device 43 for cutting the strip 8, known per se, for producing the covering layer 2. The device 43 is carried by the frame 6 and comprises fixed support walls 44 for the strip 8 and a pair of movable thrust walls 44 for locking the strip 8 against the fixed walls 44. The walls 44 are fixedly connected to the frame 6 in positions spaced from one another, and define a first wall of the channel 15, whilst the walls 45 are disposed one below the other in vertically spaced positions and define a second wall of the channel 15. The walls 45 are carried by respective slides 47 which are coupled to the frame 6 by respective slide and guide assemblies 48 which are known and not described in detail, and are movable with respect to the frame 6 in a direction parallel to the path P under the thrust of a linear actuator 49 for displacing the associated walls 45 between a retracted rest position (Figures 1 and 2) and an advanced closure position, in which the walls 45 themselves lock the strip 8 against the walls 44.

Finally, the cutting device 43 comprises a cutting blade 50, known per se, which is movable together with one of the slides 47 in the direction parallel to the path P and is coupled to the slide 47 itself by means of a known guide and slide assembly 51 to displace with respect to the slide 47 along a cutting path substantially orthogonal to the path P under the thrust of its own actuator 52 of known type.

The operation of the unit 1 will now be described starting from the condition in which the slides 47 are disposed in their retracted rest positions, the blade 50 is maintained outside the channel 15, the end portion of the strip 8 extends into the channel 15, the carriage 21 and the slide 32 are both maintained in their retracted positions, and the pincer members 25 are open in their gripping positions. Starting from this position, by means of the device 7, the strip 8 is progressively unwound from the coil 9 and advanced towards the retention device 23 upon reaching which the grip members 25 are activated and coupled to the end of the strip which, at this point, is stretched with its surface 41 facing the drum 35 (Figure 1). After this the device 28 is activated and the carriage 21 is progressively displaced towards its advanced position in which it retains the end of the strip 8 close to the edge 20 of the sheet 3. Simultaneously the device 39 is activated and the slide 32 is progressively displaced at a given velocity V1 towards its advanced position. During the displacement of the slide 32 the drum 35 comes into contact with the surface 41 of the strip 8 and exerts an unwinding thrust which simultaneously causes the strip 8 to contact both about guide roller 54 freely rotatable on the frame 6, and the drum 35 itself. During displacement of the drum 35 the strip 8 is thus bent into a V over the drum 35 which subdivides the strip 8 into two facing portions 55 and 56 of variable length, of which the portion 55 faces and overlies, but is spaced from, the sheet 3 and forms with the sheet 3 itself an acute angle different from zero, whilst the portion 56 extends in a position substantially parallel to the path P. At this point, as soon as the section of strip 8 lying between the pincer members and the cutting blade 50 assumes a value slightly in excess of the length of the sheet 3, that is to say the distance between the edges 20 and 42, the slide 32 is stopped and the actuator 49 is subsequently activated, which carries the walls 45 into their closure positions, and the actuator 52 is activated which carries the blade 50 transversely cutting the strip 8 and forming the layer 2.

Following this cut, the portion 56 overlies in part a support casing or guard carried by the carriage 21 and in part the branch 55. At this point the device 39 is activated again and the slide 32 completes its stroke towards its advanced position at a speed V2 very much greater than the speed V1 and, preferably, equal to twice the speed V1. During this latter displacement of the drum 35, upon relative sliding of the two portions 55 and 56, the portion 55 progressively overlies the sheet 3 gradually expelling the air present between the portion 55 itself and the sheet 3, whilst the portion 56 continues to slide on the portion 55. When the slide 32 reaches its advanced position the latter portion of the layer 2 also overlies the sheet 3 with its edge projecting beyond the edge 42, after which the pincer members 25 are reopened releasing the layer 2 which thus progressively completes its settling down positioning onto the sheet 3 still expelling air.

At this point the slides 32 and 47 and the carriage 21 can be brought back to their respective initial positions and another layer 2 can be superimposed on the layer 2 first deposited by following the same phases as has just been described.

Alternatively, another sheet 3 of glass can be disposed, in a known manner, onto the layer 2, or possibly a further layer 2 again following the same phases as described.

From what has been described it will be evident that the unit 1 described allows an automatic and continuous covering to be achieved of any sheet with any covering layer material and, in particular, to be achieved always continuously whatever the type of laminated sheet nevertheless achieving high and constant quality and reliability.

In fact, as opposed to the known mode of operation, in procedures actuated by the unit 1 described, the covering material no longer slides on the sheet to be covered, in that it is progressively laid onto the sheet itself. Because of this, during the positioning of the layer, no type of localised adhesion is formed between the covering layer and the sheet and, when the covering is completed, there are no wrinkles, stretches and/or zones of exposed sheet due to positioning errors of the layer encountered. This essentially derives from the fact that during the positioning phase first the strip 8 and then the layer 2 are always unequivocally positioned with respect to the sheet in that, on one hand, they are retained in fixed positions by the pincer members 24 and, on the other hand are consequently guided by the outer flanges 38 of the thrust and unwinding drum 35.

The progressive careful placing of the covering layer 2 on the sheet 3 encourages the expulsion of air from between the layer 2 and the sheet 3 avoiding the formation of air bubbles responsible for localised delaminations and imperfections of an aesthetic nature.

From the above it will be evident that the unit 1 described can have modifications and variations introduced thereto which do not go beyond the scope of protection of the present invention.

In particular a different retention device could be provided for retaining the end of the strip in fixed position with respect to the sheet, as well as a different thrust and unwinding device able to carry, first of all, the end portion of the strip into a position overlying and spaced from the sheet 3 without relative sliding movements, and then to allow a gradual settling of the layer over the sheet itself.

## Claims

1. A method for positioning a layer (2) of covering material onto a sheet to be covered, preferably a sheet of glass, the method comprising the steps of maintaining a sheet (3) to be covered in a horizontal fixed position, progressively unwinding a strip (8) of covering material from a coil (9) thereof, and progressively displacing a portion of the said strip (8) of covering material over the sheet (3); a free end of the said strip (8) being retained in a releasable manner close to one edge (20) of the said sheet (3); the progressive displacement of the said strip portion being effected by exerting on a surface (41) of the said strip (8) opposite that which is disposed, in use, in contact with the said sheet (3) a thrust action in such a way as to curve the strip (8) and progressively carry an end portion (55) of the strip (8) itself into a position facing and overlying the said sheet (3) without relative sliding motion between the sheet (3) and the strip (8); the method further comprising the further steps of transversely cutting the strip (8) to form the said covering layer (2) and releasing the covering layer (2) allowing it to settle onto the sheet (3) to be covered;
**characterised in that** the curving of the said strip (8) is effected in such a way that the said end portion (55) forms with the said sheet (3) an acute angle different from zero, in order to allow a gradual settling of said end portion (55) onto said sheet (3).

2. A method according to Claim 1, **characterised in that** the said continuous thrust action is effected by advancing a thrust member (35) in contact with the surface (41) of the strip (8) opposite that disposed, in use, in contact with the said sheet (3), and at least partly winding the said strip (8) about the thrust member (35) itself.

3. A method according to Claim 2, **characterised in that** the said thrust member (35) is advanced over the said sheet (3) along a rectilinear path (P) substantially parallel to the sheet (3) itself.

4. A method according to Claim 3, **characterised in that** the said thrust member (35) is advanced along the said rectilinear path (P) at a variable speed.

5. A method according to Claim 3 or Claim 4, **characterised in that** during at least part of the said rectilinear path (P) of advance the said strip (8) is wound substantially in a V about the said thrust member (35).

6. A method according to any of Claims 3 to 5, **characterised in that** during at least part of the said rectilinear path (P) the strip (8) is wound about the said thrust member (35) in such a way that two portions (55, 56) of the strip (8) cooperate slidingly together.

7. A method according to any of Claims from 3 to 6, **characterised in that** the said cutting step is effected when the said thrust member (35) passes a fixed intermediate point of its advancing path (P).

8. A method according to Claim 7, **characterised in that** during the said cutting step the said thrust member (35) is maintained stationary at the said intermediate point.

9. A method according to any of Claims from 3 to 8, **characterised in that** during advancement along the said path (P) the said thrust member (35) slidingly cooperates with the said strip (8).

10. A unit (1) for positioning a layer (2) of covering material onto a sheet to be covered, preferably a sheet of glass, according to the method of anyone of the preceding claims; the unit (1) comprising:
- first (5) and second (10) support means for supporting a sheet (3) to be covered in a fixed horizontal position, and respectively, a coil (9) of strip (8) of covering material for said sheet (3);
- releasable retention means (25) for holding a free end of said strip (8) in a releasable manner close to one edge (20) of said sheet (3);
- advancing means (30) for progressively carrying a portion of said strip (8) over said sheet (3); said advancing means (30) including a thrust member (35), which is movable from a retracted position to an advanced position for exerting, on a surface (41) of said strip (8) opposite that disposed, in use, in contact with said sheet (3), a thrust action to curve said strip (8) and progressively carry an end portion (55) of the strip (8) into a position facing and overlying said sheet (3), without relative sliding between the sheet (3) and the strip (8); and
- cutting means (50) for transversely cutting the strip (8) and forming said covering layer (2);
**characterised in that** said thrust member (35) is disposed higher than the retention means (25) with respect to said sheet (3), so that said strip (8) forms an acute angle different from zero with said sheet (3) during displacement from the retracted to the advanced positions, in order to allow a gradual settling of said end portion (55) onto said sheet (3); said thrust member (35) facing and being spaced from said surface (41) of the strip (8), when said thrust member (35) is disposed in its retracted position and said retention means (25) hold said free end of the strip (8).

11. A unit according to Claim 10, **characterised in that** said cutting means (50) are carried by a fixed frame (6).

12. A unit according to Claim 10 or 11, **characterised in that** said advancing means (30) further comprise guide means (31) for advancing said thrust member (35) along a path (P) above said sheet (3), and motion means (39) for displacing said thrust member (35) along said path (P) between said retracted and advanced positions, in each of which the thrust member (35) is always disposed on the same side of the strip (8) with respect to said retention means (25).

13. A unit according to Claim 12, **characterised in that** said path (P) is a rectilinear path.

14. A unit according to Claim 13, **characterised in that** said rectilinear path (P) is parallel to said sheet (3).

15. A unit according to Claims from 12 to 14, **characterised in that** the said thrust member (35) comprises a drum (35) having an axis (36) substantially orthogonal to the said path (P).

16. A unit according to Claim 15, **characterised in that** the said drum (35) is locked against rotation about its axis (36) with respect to the said sheet (3).

17. A unit according to Claim 15, **characterised in that** the said drum (35) is rotatable about its axis (36) with respect to the said sheet (3).

18. A unit according to any of Claims from 10 to 17, **characterised in that** the said thrust member (35) includes guide means (38) for the said strip (8) disposed, in use on opposite lateral edges of the said strip (8).

19. A unit according to one of Claims from 10 to 18, **characterised in that** the said strip (8) is slidably engaged in an outlet passage (17), and **in that** the said retention means (25) are movable between a grip position in which they are disposed substantially facing the said outlet passage (17) and are able positively to connect with the end of the said strip (8), and a retention position in which they retain the end of the strip (8) close to the edge (20) of the said sheet (3).

20. A unit according to any of Claims from 10 to 19, **characterised in that** it includes adjustment means (26) for adjusting the position of the said retention means with respect to the said sheet (3) in a direction substantially orthogonal to the sheet (3) itself.

## Patentansprüche

1. Verfahren zum Positionieren einer Schicht (2) aus Beschichtungsmaterial auf einer zu beschichtenden Platte, vorzugsweise einer Platte aus Glas, wobei das Verfahren die Schritte Halten einer zu beschichtenden Platte (3) in einer horizontal festgelegten Stellung, progressives Abwickeln eines Streifens (8) aus Beschichtungsmaterial von einer Spule (9) davon, und progressives Verschieben eines Abschnitts des Streifens (8) aus Beschichtungsmaterial über die Platte (3) aufweist, wobei ein freies Ende des Streifens (8) in lösbarer Weise in der Nähe des einen Randes (20) der Platte (3) zurückgehalten wird, wobei die progressive Verschiebung des Streifenabschnitts durch Ausüben einer Druckkraft auf eine Fläche (41) des Streifens (8), die entgegengesetzt derjenigen ist, welche bei Verwendung in Kontakt mit der Platte (3) angeordnet wird, derart bewirkt wird, daß der Streifen (8) gekrümmt wird und ein Endabschnitt (55) des Streifens (8) an sich in eine der Platte (3) zugewandten und darüberliegenden Stellung ohne gleitende Relativbewegung zwischen der Platte (3) und dem Streifen (8) progressiv geführt wird; wobei das Verfahren ferner die weiteren Schritte aufweist Querschneiden des Streifens (8), um die Beschichtung (2) zu bilden, und Freigeben der Beschichtung (2), um zu ermöglichen, daß sie auf die zu beschichtende Platte (3) festgesetzt wird, **dadurch gekennzeichnet, daß** das Krümmen des Streifens (8) derart bewirkt wird, daß der Endabschnitt (55) mit der Platte (3) einen spitzen Winkel verschieden von Null bildet, um ein graduelles festsetzen des Endabschnittes (55) auf der Platte (3) zu ermöglichen.

2. Verfahren nach Anspruch 1, **dadurch gekennzeichnet, daß** die kontinuierliche Druckwirkung durch Vorrücken eines Druckteils (35) in Kontakt mit der Fläche (41) des Streifens (8), die entgegengesetzt derjenigen ist, die bei Verwendung in Kontakt mit der Platte (3) angeordnet ist, und zumindest teilweises Wickeln des Streifens (8) um das Druckteil (35) an sich bewirkt wird.

3. Verfahren nach Anspruch 2, **dadurch gekennzeichnet, daß** das Druckteil (35) über der Platte (3) entlang einer geradlinigen Bahn (P) im wesentlichen parallel zu der Platte (3) an sich vorgerückt wird.

4. Verfahren nach Anspruch 3, **dadurch gekennzeichnet, daß** das Druckteil (35) entlang der geradlinigen Bahn (P) mit einer variablen Geschwindigkeit vorgerückt wird.

5. Verfahren nach Anspruch 3 oder 4, **dadurch gekennzeichnet, daß** während zumindest eines Teils der geradlinigen Bahn (P) des Vorrückens der Streifen (8) im wesentlichen in einem V um das Druckteil (35) gewunden wird.

6. Verfahren nach einem der Ansprüche 3 bis 5, **dadurch gekennzeichnet, daß** während zumindest eines Teils der geradlinigen Bahn (P) der Streifen (8) um das Druckteil (35) derart gewickelt wird, daß zwei Abschnitte (55, 56) des Streifens (8) gleitend miteinander zusammenwirken.

7. Verfahren nach einem der Ansprüche 3 bis 6, **dadurch gekennzeichnet, daß** der Schneidschritt bewirkt wird, wenn das Druckteil (35) eine festgelegte Zwischenstelle seiner Vorrückbahn (P) passiert.

8. Verfahren nach Anspruch 7, **dadurch gekennzeichnet, daß** beim Schneidschritt das Druckteil (35) an der Zwischenstelle feststehend gehalten wird.

9. Verfahren nach einem der Ansprüche 3 bis 8, **dadurch gekennzeichnet, daß** beim Vorrücken entlang der Bahn (P) das Druckteil (35) mit dem Streifen (8) gleitend zusammenwirkt.

10. Einrichtung (1) zum Positionieren einer Schicht (2) aus Beschichtungsmaterial auf einer zu beschichtenden Platte, vorzugsweise einer Platte aus Glas, gemäß dem Verfahren nach einem der vorhergehenden Ansprüche, wobei die Einrichtung (1) aufweist:
- erste (5) und zweite (10) Stützmittel zum Abstützen einer zu beschichtenden Platte (3) in einer horizontal festgelegten Stellung, bzw. einer Spule (9) von Streifen (8) aus Beschichtungsmaterial für die Platte (3),
- lösbare Rückhaltemittel (25) zum Halten eines freien Endes des Streifens (8) auf eine lösbare Weise in der Nähe des einen Randes (20) der Platte (3),
- Vorrückmittel (30) zum progressiven Zuführen eines Abschnitts des Streifens (8) über die Platte (3), wobei die Vorrückmittel (30) ein Druckmittel (35) aufweisen, welches aus einer Rückhaltestellung hin zu einer Vorrückstellung bewegbar ist, zum Ausüben einer Druckwirkung auf eine Fläche (41) des Streifens (8), die entgegengesetzt derjenigen ist, die bei Verwendung in Kontakt mit der Platte (3) angeordnet wird, um den Streifen (8) zu krümmen und um einen Endabschnitt (55) des Streifens (8) in eine der Platte (3) zugewandten und darüberliegenden Stellung ohne relatives Gleiten zwischen der Platte (3) und dem Streifen (8) progressiv zu führen, und
- Schneidmittel (50) zum Querschneiden des Streifens (8) und zum Bilden der Abdeckschicht (2),
**dadurch gekennzeichnet, dass** das Druckmittel (35) höher als die Rückhaltemittel (25) bezüglich der Platte (3) angeordnet ist, so daß der Streifen (8) einen spitzen Winkel verschieden von Null mit der Platte (3) während der Verschiebung aus der Rückhalte- hin zu der Vorrückstellung ausbildet, um ein graduelles festsetzen des Endabschnitts (55) auf der Platte (3) zu ermöglichen, wobei das Druckteil (35) der Fläche (41) des Streifens (8) zugewandt ist und zu derselben mit einem Abstand angeordnet ist, wenn das Druckteil (35) in seiner Rückhaltestellung angeordnet ist und die Rückhaltemittel (25) das freie Ende des Streifens (8) halten.

11. Einrichtung nach Anspruch 10, **dadurch gekennzeichnet, daß** die Schneidmittel (50) von einem fixierten Rahmen (6) gehalten werden.

12. Einrichtung nach Anspruch 10 oder 11, **dadurch gekennzeichnet, daß** die Vorrückmittel (30) ferner Führungsmittel (31) zum Vorrücken des Druckteils (35) entlang einer Bahn (P) über der Platte (3) und Bewegungsmittel (39) zum Verschieben des Druckteils (35) entlang der Bahn (P) zwischen der Rückhalte- und der Vorrückstellung aufweisen, wobei in jeder davon das Druckteil (35) immer an derselben Seite des Streifens (8) bezüglich der Rückhaltemittel (25) angeordnet ist.

13. Einrichtung nach Anspruch 12, **dadurch gekennzeichnet, daß** die Bahn (P) eine geradlinige Bahn ist.

14. Einrichtung nach Anspruch 13, **dadurch gekennzeichnet, daß** die geradlinige Bahn (P) parallel zu der Platte (3) ist.

15. Einrichtung nach einem der Ansprüche 12 bis 14, **dadurch gekennzeichnet, daß** das Druckteil (35) eine Trommel (35) aufweist, die eine Achse (36) aufweist, welche im wesentlichen orthogonal zu der Bahn (P) ist.

16. Einrichtung nach Anspruch 15, **dadurch gekennzeichnet, daß** die Trommel (35) gegen Drehung um ihre Achse (36) bezüglich der Platte (3) verriegelt ist.

17. Einrichtung nach Anspruch 15, **dadurch gekennzeichnet, daß** die Trommel (35) um ihre Achse (36) bezüglich der Platte (3) drehbar ist.

18. Einrichtung nach einem der Ansprüche 10 bis 17, **dadurch gekennzeichnet, daß** das Druckteil (35) Führungsmittel (38) für den Streifen (8) aufweist, die bei Verwendung an entgegengesetzten seitlichen Rändern des Streifens (8) angeordnet sind.

19. Einrichtung nach einem der Ansprüche 10 bis 18, **dadurch gekennzeichnet, daß** der Streifen (8) in einen Auslassdurchgang (17) gleitend eingreift, und daß die Rückhaltemittel (25) zwischen einer Greif-Stellung, in welcher sie im wesentlichen dem Auslassdurchgang (17) zugewandt angeordnet sind und kraftschlüssig mit dem Ende des Streifens (8) verbindbar sind, und einer Rückhaltestellung bewegbar sind, in welcher sie das Ende des Streifens (8) in der Nähe des Randes (20) der Platte (3) zurückhalten.

20. Einrichtung nach einem der Ansprüche 10 bis 19, **dadurch gekennzeichnet, daß** sie Einstellmittel (26) aufweisen zum Einstellen der Stellung der Rückhaltemittel bezüglich der Platte (3) in einer Richtung, welche im wesentlichen orthogonal zu der Platte (3) an sich ist.

## Revendications

1. Procédé de positionnement d'une couche (2) de matière de revêtement sur une feuille à revêtir, de préférence une feuille de verre, le procédé comprenant les étapes consistant à maintenir une feuille (3) à revêtir dans une position fixe horizontale, dérouler progressivement une bande (8) de matière de revêtement d'une bobine (9) de cette dernière, et déplacer progressivement une portion de ladite bande (8) de matière de revêtement au-dessus de la feuille (3); une extrémité libre de ladite bande (8) étant retenue d'une manière libérable près d'un bord (20) de ladite feuille (3); le déplacement progressif de ladite portion de bande étant effectué en exerçant, sur une surface (41) de ladite bande (8) opposée à celle qui est placée, en service, en contact avec ladite feuille (3), une action de poussée de manière à courber la bande (8) et à amener progressivement une portion d'extrémité (55) de la bande (8) elle-même jusqu'à une position faisant face à et recouvrant ladite feuille (3) sans mouvement de glissement relatif entre la feuille (3) et la bande (8); le procédé comprenant en outre les étapes consistant à couper transversalement la bande (8) pour former ladite couche de revêtement (2) et à relâcher la couche de revêtement (2) pour lui permettre de se déposer sur la feuille (3) à revêtir;
**caractérisé en ce que** le courbement de ladite bande (8) est effectué de telle manière que ladite portion d'extrémité (55) forme avec ladite feuille (3) un angle aigu différent de zéro, en vue de permettre un dépôt graduel de ladite portion d'extrémité (55) sur ladite feuille (3).

2. Procédé selon la revendication 1, **caractérisé en ce que** ladite action de poussée continue est effectuée en faisant avancer un organe de poussée (35) en contact avec la surface (41) de la bande (8) opposée à celle placée, en service, en contact avec ladite feuille (3), et en enroulant au moins partiellement ladite bande (8) autour de l'organe de poussée (35) lui-même.

3. Procédé selon la revendication 2, **caractérisé en ce que** ledit organe de poussée (35) est fait avancer au-dessus de ladite feuille (3) le long d'un trajet rectiligne (P) sensiblement parallèle à la feuille (3) elle-même.

4. Procédé selon la revendication 3, **caractérisé en ce que** ledit organe de poussée (35) est fait avancer le long dudit trajet rectiligne (P) à une vitesse variable.

5. Procédé selon la revendication 3 ou 4, **caractérisé en ce que** durant au moins une partie dudit trajet rectiligne (P) d'avance, ladite bande (8) est enroulée sensiblement en V autour dudit organe de poussée (35).

6. Procédé selon l'une quelconque des revendications 3 à 5, **caractérisé en ce que** durant au moins une partie dudit trajet rectiligne (P), la bande (8) est enroulée autour dudit organe de poussée (35) de telle manière que deux portions (55, 56) de la bande (8) coopèrent en glissement l'une avec l'autre.

7. Procédé selon l'une quelconque des revendications 3 à 6, **caractérisé en ce que** ladite étape de coupe est exécutée lorsque ledit organe de poussée (35) passe par un point intermédiaire fixe de son trajet d'avance (P).

8. Procédé selon la revendication 7, **caractérisé en ce que** durant ladite étape de coupe, ledit organe de poussée (35) est maintenu stationnaire audit point intermédiaire.

9. Procédé selon l'une quelconque des revendications 3 à 8, **caractérisé en ce que** durant la progression le long dudit trajet (P), ledit organe de poussée (35) coopère en glissement avec ladite bande (8).

10. Unité (1) servant à positionner une couche (2) de matière de revêtement sur une feuille à revêtir, de préférence une feuille de verre, selon le procédé de l'une quelconque des revendications précédentes; l'unité (1) comprenant:
- des premiers (5) et deuxièmes (10) moyens de support servant à supporter une feuille (3) à revêtir dans une position horizontale fixe, et respectivement, une bobine (9) de bande (8) de matière de revêtement pour ladite feuille (3);
- des moyens de retenue libérables (25) servant à tenir une extrémité libre de ladite bande (8) d'une manière libérable près d'un bord (20) de ladite feuille (3);
- des moyens d'avance (30) servant à amener progressivement une portion de ladite bande (8) au-dessus de ladite feuille (3); lesdits moyens d'avance (30) comprenant un organe de poussée (35) qui est déplaçable d'une position reculée à une position avancée pour exercer, sur une surface (41) de ladite bande (8) opposée à celle placée, en service, en contact avec ladite feuille (3), une action de poussée afin de courber ladite bande (8) et amener progressivement une portion d'extrémité (55) de la bande (8) jusqu'à une position faisant face à et recouvrant ladite feuille (3), sans glissement relatif entre la feuille (3) et la bande (8); et
- des moyens de coupe (50) servant à couper transversalement la bande (8) et former ladite couche de revêtement (2);
**caractérisée en ce que** ledit organe de poussée (35) est placé plus haut que les moyens de retenue (25) par rapport à ladite feuille (3), de sorte que ladite bande (8) forme un angle aigu différent de zéro avec ladite feuille (3) au cours du déplacement de la position reculée à la position avancée, en vue de permettre un dépôt graduel de ladite portion d'extrémité (55) sur ladite feuille (3); ledit organe de poussée (35) faisant face à et étant espacé de ladite surface (41) de la bande (8) quand ledit organe de poussée (35) est dans sa position reculée et lesdits moyens de retenue (25) tiennent ladite extrémité libre de la bande (8).

11. Unité selon la revendication 10, **caractérisée en ce que** lesdits moyens de coupe (50) sont portés par un châssis fixe (6).

12. Unité selon la revendication 10 ou 11, **caractérisée en ce que** lesdits moyens d'avance (30) comprennent en outre des moyens de guidage (31) servant à faire avancer ledit organe de poussée (35) le long d'un trajet (P) au-dessus de ladite feuille (3), et des moyens de mouvement (39) servant à déplacer ledit organe de poussée (35) le long dudit trajet (P) entre lesdites positions reculée et avancée, dans chacune desquelles l'organe de poussée (35) est toujours situé du même côté de la bande (8) par rapport auxdits moyens de retenue (25).

13. Unité selon la revendication 12, **caractérisée en ce que** ledit trajet (P) est un trajet rectiligne.

14. Unité selon la revendication 13, **caractérisée en ce que** ledit trajet rectiligne (P) est parallèle à ladite feuille (3).

15. Unité selon l'une quelconque des revendications 12 à 14, **caractérisée en ce que** ledit organe de poussée (35) comprend un tambour (35) ayant un axe (36) sensiblement orthogonal audit trajet (P).

16. Unité selon la revendication 15, **caractérisée en ce que** ledit tambour (35) est bloqué angulairement autour de son axe (36) par rapport à ladite feuille (3).

17. Unité selon la revendication 15, **caractérisée en ce que** ledit tambour (35) est susceptible de tourner autour de son axe (36) par rapport à ladite feuille (3).

18. Unité selon l'une quelconque des revendications 10 à 17, **caractérisée en ce que** ledit organe de poussée (35) comprend des moyens de guidage (38) pour ladite bande (8) placés, en service, sur des bords latéraux opposés de ladite bande (8).

19. Unité selon l'une quelconque des revendications 10 à 18, **caractérisée en ce que** ladite bande (8) est engagée en glissement dans un passage de sortie (17), et **en ce que** lesdits moyens de retenue (25) sont déplaçables entre une position de préhension dans laquelle ils sont placés sensiblement face audit passage de sortie (17) et sont capables de se solidariser mécaniquement à l'extrémité de ladite bande (8), et une position de retenue dans laquelle ils retiennent l'extrémité de la bande (8) près du bord (20) de ladite feuille (3).

20. Unité selon l'une quelconque des revendications 10 à 19, **caractérisée en ce qu'**elle comprend des moyens de réglage (26) pour ajuster la position desdits moyens de retenue par rapport à ladite feuille (3) dans une direction sensiblement orthogonale à la feuille (3) elle-même.
